# EUROPÄISCHE PATENTSCHRIFT

(11) **EP 3 762 284 B1**
(45) Veröffentlichungstag und Bekanntmachung des Hinweises auf die Patenterteilung: **21.09.2022**
(21) Anmeldenummer: 19700041.7
(22) Anmeldetag: 03.01.2019
(51) Int. Cl.: B62M 6/45

(54) **STEUERUNGSVERFAHREN FÜR EINEN ELEKTROMOTOR EINES ELEKTROFAHRRADS**
CONTROL METHOD FOR AN ELECTRIC MOTOR OF AN ELECTRIC BICYCLE
PROCEDE DE COMMANDE D'UN MOTEUR ELECTRIQUE D'UNE BICYCLETTE ELECTRIQUE

(30) Priorität: 07.03.2018 DE 102018203397
(43) Veröffentlichungstag der Anmeldung: 13.01.2021
(73) Patentinhaber: Robert Bosch GmbH, 70442 Stuttgart (DE)
(72) Erfinder: BAUMGAERTNER, Daniel, 72070 Tuebingen (DE); WIENSS, Andreas, 72800 Eningen Unter Achalm (DE)
(86) Internationale Anmeldenummer: PCT/EP2019/050065
(87) Internationale Veröffentlichungsnummer: WO 2019/170298

(56) Entgegenhaltungen:
- EP-A1- 3 251 936
- DE-B3-102016 218 374

## Beschreibung

Die vorliegende Erfindung betrifft ein Steuerungsverfahren für einen Elektromotor eines Elektrofahrrads für eine Schiebehilfe des Elektrofahrrads, ein Steuergerät zur Durchführung des Steuerungsverfahrens und ein Elektrofahrrad mit dem Steuergerät.

### Stand der Technik

Elektrofahrräder weisen gegenüber herkömmlichen Fahrradkomponenten zusätzliche relativ schwere Antriebskomponenten auf, beispielsweise einen Elektromotor, ein Getriebe und eine Batterie. Typische Elektrofahrräder wiegen deshalb mit ca. 14 bis 25 Kilogramm, insbesondere ca. 21 Kilogramm, in der Regel deutlich mehr als normale, nicht motorisch unterstützte Fahrräder. Das Schieben von Elektrofahrrädern ist folglich an einem Hang einer Fahrtstrecke für den Fahrradfahrer anstrengender als das Schieben eines normalen Fahrrads. Um Elektrofahrräder komfortabel eine Rampe oder einen Hang einer Fahrbahnebene hinaufzuschieben, ist deshalb in der Regel für Elektrofahrräder eine sogenannte Schiebehilfe beziehungsweise ein "Walk Assist" vorgesehen, welche bei Bedarf vom Fahrradfahrer aktiviert werden kann. Die Aktivierung erfolgt typischerweise durch Betätigung eines Schalters. Dadurch wird das Schieben des Elektrofahrrads motorisch unterstützt und das Schieben somit für den Fahrradfahrer erheblich erleichtert. Falls während einer aktivierten Schiebehilfe ein Blockieren des Antriebsystems erkannt wird, ist im Stand der Technik ein Abschalten des Elektromotors nach einer konstanten Abschaltzeitspanne vorgesehen, beispielsweise nach 3 Sekunden. Dadurch wird der Elektromotor vor Überhitzung geschützt.

Die Dokumente DE 10 2016 209 560 A1 (welches die Merkmale der Präambel des Anspruchs 1 zeigt), DE 10 2016 218 374 B3 und EP 3 251 936 A1 offenbaren Steuerungsverfahren zur Regelung eines Elektromotors für eine Schiebehilfe eines Elektrofahrrads.

Die Aufgabe der vorliegenden Erfindung ist es, Verschleiß am Elektrofahrrad durch die Schiebehilfe zu reduzieren und während der aktivierten Schiebehilfe ein Überwinden von Hindernissen an einer Steigung einer Fahrtstrecke bzw. einer Schiebestrecke zu unterstützen.

### Offenbarung der Erfindung

Die obige Aufgabe wird gemäß der unabhängigen Ansprüche 1 (Verfahren) und 8 (Steuergerät) gelöst.

Die vorliegende Erfindung betrifft ein Steuerungsverfahren für einen Elektromotor eines Elektrofahrrads, wobei der Elektromotor Teil eines Antriebssystems des Elektrofahrrads ist. Vorteilhafterweise weist das Antriebssystem zusätzlich weitere Komponenten auf, beispielsweise ein Getriebe und/oder eine Tretachse des Elektrofahrrads. Das Steuerungsverfahren startet mit einer Erfassung einer Aktivierung einer Schiebehilfe. Beispielsweise erfolgt die Aktivierung der Schiebehilfe durch eine Betätigung eines Schalters vom Fahrradfahrer. Anschließend erfolgt eine Ansteuerung des Elektromotors in Abhängigkeit der erfassten Aktivierung, wodurch das Elektrofahrrad mittels des Elektromotors angetrieben wird. Das Steuerungsverfahren kann vorteilhafterweise weitere Verfahrensschritte aufweisen, beispielsweise eine Anpassung der Ansteuerung in Abhängigkeit einer erfassten Geschwindigkeit des Elektrofahrrads. Anschließend wird als erste Sensorgröße ein Nickwinkel des Elektrofahrrads um eine Querachse des Elektrofahrrads und als zweite Sensorgröße eine Betriebsgröße des Elektrofahrrads erfasst. Die Betriebsgröße ist vorteilhäfterweise ein Rotorlagewinkel oder eine Drehzahl des Rotors des Elektromotors. In Abhängigkeit der zweiten Sensorgröße wird ermittelt, ob ein Stillstand mindestens einer Komponente des Antriebssystems vorliegt. Wenn ein Stillstand einer Komponente des Antriebssystems in Abhängigkeit der erfassten Betriebsgröße erkannt wird, erfolgt anschließend eine Ermittlung einer Abschaltzeitspanne in Abhängigkeit des erfassten Nickwinkels. Der Elektromotor wird danach in Abhängigkeit eines Ablaufs der ermittelten Abschaltzeitspanne abgeschaltet, insbesondere ausgehend vom Zeitpunkt des erkannten Stillstands.

Das Verfahren weist gegenüber dem bekannten Stand der Technik den Vorteil auf, dass im Falle einer Aktivierung der Schiebehilfe auf einer ebenen Fahrbahnoberfläche und bei einem ermittelten Stillstand des Antriebssystems ein Verschleiß des Elektromotors durch ein frühes Abschalten reduziert beziehungsweise vermieden wird. Ein Stillstand des Antriebssystems liegt beispielsweise vor, wenn gleichzeitig zur Ansteuerung des Elektromotors eine Bremse des Elektrofahrrads betätigt wird und/oder die Pedale des Elektrofahrrads durch ein Hindernis blockiert werden und/oder ein Antriebsrad des Elektrofahrrads ein nicht überwindbares Hindernis kontaktieren. Beispielsweise wird der Elektromotor bei einer "fehlerhaften" Aktivierung der Schiebehilfe und einer gleichzeitig gehaltenen Bremse in der Regel, d.h. wenn die Schiebehilfe des Elektrofahrrads nicht an einem Hang einer Fahrtstrecke betrieben wird, vorteilhafterweise schnell abgeschaltet. Des Weiteren wird im Falle des Vorliegens von überwindbaren Hindernissen an einem Hang, beispielsweise eines Bordsteins, das Überwinden des Hindernisses durch eine verlängerte Ansteuerung des Elektromotors erleichtert. Somit kann beispielsweise ein Mountainbiker beim Schieben an einem Hang im Wald leichter Äste oder Wurzeln überwinden. Durch die verlängerte Abschaltzeitspanne wird des Weiterem einem Fahrradfahrer an einem Hang ein kurzzeitiges Halten des Elektrofahrrads erleichtert. Durch die Ermittlung der Abschaltzeitspanne des Elektromotors in Abhängigkeit des Nickwinkels wird die Schiebehilfe somit komfortabler.

In einer Ausführung weist das Steuerungsverfahren eine Erfassung von Ortskoordinaten des Elektrofahrrads auf. Anschließend wird die Abschaltzeitspanne zusätzlich in Abhängigkeit der erfassten Ortskoordinaten ermittelt. Dadurch wird vorteilhafterweise für Ortskoordinaten in Waldgebieten und/oder für Ortskoordinaten in Gebieten mit Höhenunterschieden in einer Topographie eines Geländes, welche beispielsweise über einen vorgegebenen Topographie-Schwellenwert liegen, eine längere Abschaltzeitspanne ermittelt. Dadurch wird beispielsweise das Überwinden von Ästen durch Aktivierung der Schiebehilfe beziehungsweise ein Halten des Elektrofahrrads an einer Steigung der Fahrtstrecke erleichtert.

In einer weiteren Ausführung wird eine Beschaffenheit eines Untergrunds einer Umgebung des Elektrofahrrads erfasst. Vorteilhafterweise wird die Beschaffenheit des Untergrunds in Abhängigkeit einer mittels eines Beschleunigungssensors erfassten Beschleunigung des Elektrofahrrads in Richtung der Hochachse des Elektrofahrrads und/oder in Abhängigkeit eines mittels einer Kamera erfassten Kamerabildes ermittelt. Die Ermittlung der Abschaltzeitspanne erfolgt in dieser Ausführung zusätzlich in Abhängigkeit der erfassten Beschaffenheit des Untergrunds. Dadurch entsteht der Vorteil, dass in einem unebenen Gelände die Abschaltzeitspanne vorteilhafterweise gegenüber einem ebenen Gelände verlängert ermittelt wird. Somit können Hindernisse an einer Steigung der Fahrtstrecke während des Betriebs der Schiebehilfe, beispielsweise an einem steilen Hang auf einem unbefestigten Waldweg, überwunden und/oder das Elektrofahrrad an einem Hang leichter gehalten werden.

In einer anderen Ausgestaltung der Erfindung erfolgt die Ermittlung der Abschaltzeitspanne zusätzlich in Abhängigkeit einer Bautypkategorie des Elektrofahrrads. Insbesondere erfolgt die Abschaltzeitspanne in Abhängigkeit der Bautypkategorien Mountainbike und/oder Cityrad. So wird vorteilhafterweise insbesondere für ein Mountainbike eine verlängerte Abschaltzeitspanne als für ein Cityrad ermittelt, da ein Bedarf für ein Schieben und ein Überwinden von Hindernissen an einem Hang im Falle einer Bautypkategorie Mountainbike wahrscheinlicher ist.

In einer bevorzugten Ausgestaltung erfolgt eine Erfassung beziehungsweise eine Ermittlung eines Gewichts beziehungsweise einer Gesamtmasse des Elektrofahrrads. Die Ermittlung des Gewichtes erfolgt beispielsweise in Abhängigkeit einer bestimmten Geschwindigkeit des Elektrofahrrads, des erfassten Nickwinkels sowie eines bestimmten Antriebsdrehmomentes des Elektromotors. Zur Ermittlung eines Gewichts des Elektrofahrrads siehe beispielsweise das Dokument DE 10 2012 222 854 A1. Die Ermittlung der Abschaltzeitspanne wird in dieser Ausgestaltung zusätzlich in Abhängigkeit des erfassten Gewichts durchgeführt. Dadurch entsteht der Vorteil, dass das Elektrofahrrad an einem steilen Hang von einem Fahrradfahrer leichter gehalten und/oder ein Hindernis an einer Steigung einer Fahrtstrecke leichter überwunden werden kann.

In einer besonders bevorzugten Ausgestaltung erfolgt eine Erfassung einer Ankopplung eines Anhängers an das Elektrofahrrad. Die Ankopplung kann beispielsweise mittels eines Drucksensors und/oder mittels einer Kamera erfasst und/oder in Abhängigkeit einer erfassten Geschwindigkeit des Elektrofahrrads und/oder in Abhängigkeit einer erfassten Beschleunigung des Elektrofahrrads in Richtung der Längsachse des Elektrofahrrads ermittelt werden. Beispielsweise lässt der Beschleunigungsverlauf des Elektrofahrrads in Richtung der Längsachse während des Schiebens und/oder während der Fahrt auf einen angekoppelten Anhänger schließen. Anschließend erfolgt die Ermittlung der Abschaltzeitspanne in dieser Ausgestaltung zusätzlich in Abhängigkeit der erfassten Ankopplung. Dadurch entsteht der Vorteil, dass das Elektrofahrrad mit dem Anhänger an einem steilen Hang von einem Fahrradfahrer leichter gehalten und/oder ein Hindernis an einer Steigung einer Fahrtstrecke leichter überwunden werden kann.

In einer Weiterführung wird eine Kühlvorrichtung zur Kühlung des Elektromotors in Abhängigkeit der ermittelten Abschaltzeitspanne eingeschaltet. Beispielsweise wird die Kühlvorrichtung bei Überschreitung eines vorgegebenen Schwellenwerts für die Abschaltzeitspanne eingeschaltet. Die Kühlvorrichtung ist beispielsweise ein Ventilator. Dadurch wird der Verschleiß des Elektromotors zusätzlich reduziert.

Die Erfindung betrifft auch ein Steuergerät, wobei das Steuergerät zur Durchführung des erfindungsgemäßen Steuerungsverfahrens für einen Elektromotor eines Elektrofahrrads konfiguriert j ist. Das erfindungsgemäße Steuergerät weist folglich die Vorteile des Steuerungsverfahrens auf.

Die Erfindung betrifft des Weiteren das Elektrofahrrad. Das Elektrofahrrad weist ein Betätigungsmittel zur Aktivierung der Schiebehilfe auf. Das Betätigungsmittel ist insbesondere ein Schalter, welcher beispielsweise am Lenker des Elektrofahrrads angeordnet ist. Der Elektromotor des Elektrofahrrads ist dazu eingerichtet, das Elektrofahrrad anzutreiben. Der Elektromotor ist Teil des Antriebssystems, welches beispielsweise an einer Tretachse des Elektrofahrrads angeordnet ist. Das Antriebssystem weist vorteilhafterweise den Elektromotor, die Tretachse, ein Getriebe und/oder einen Drehmomentsensor auf. Am Elektrofahrrad ist mindestens ein erster Sensor angeordnet, welcher dazu eingerichtet ist, einen Nickwinkel des Elektrofahrrads um eine Querachse des Elektrofahrrads zu erfassen. Der Sensor ist beispielsweise ein Beschleunigungssensor, insbesondere eine inertiale Messeinheit, welche mindestens zwei Beschleunigungen in jeweils einer Raumrichtung misst. Bevorzugt erkennt die inertiale Messeinheit die Lage des Elektrofahrrads im Raum und somit auch den Nickwinkel um die Querachse. Das Elektrofahrrad weist ferner einen zweiten Sensor auf, welcher dazu eingerichtet ist, eine Betriebsgröße des Elektrofahrrads zu erfassen. Des Weiteren ist das erfindungsgemäße Steuergerät an dem Elektrofahrrad angeordnet.

Weitere Vorteile ergeben sich aus der nachfolgenden Beschreibung von Ausführungsbeispielen mit Bezug zu den Figuren.
Figur 1: Elektrofahrrad
Figur 2: Steuergerät
Figur 3: Ablaufdiagramm des Steuerungsverfahrens als Blockschaltbild
Figur 4: Verlauf des Steuersignals

### Ausführungsbeispiele

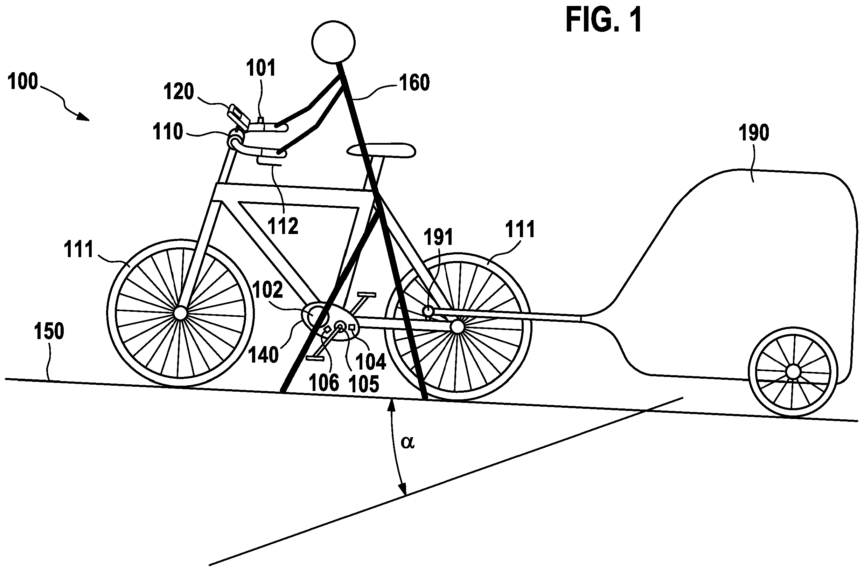

In Figur 1 ist ein Elektrofahrrad 100 dargestellt. An einem Lenker 110 des Elektrofahrrads 100 ist ein Betätigungsmittel 101 zur Aktivierung einer Schiebehilfe für das Elektrofahrrad 100 angeordnet. Das Betätigungsmittel 101 ist beispielsweise ein Schalter 101, welcher durch den Fahrradfahrer 160 während eines Schiebens des Elektrofahrrads 100 betätigt werden kann. Eine aktivierte Schiebehilfe resultiert für einem Fahrradfahrer 160 in einer motorischen Kraftunterstützung durch eine Ansteuerung eines Elektromotors 102 des Elektrofahrrads 100. Im Ausführungsbeispiele aus Figur 1 ist der Elektromotor 102 Teil eines Antriebssystems 140 des Elektrofahrrads 100, wobei das Antriebssystem 140 zusätzlich mindestens eine Tretachse 105 sowie einen ersten Sensor 104 und einen zweiten Sensor 106 umfasst. Der erste Sensor 104 ist eine inertiale Messeinheit, welche einen Nickwinkel α des Elektrofahrrads 100 um die Querachse des Elektrofahrrads 100 erfasst. Wenn der Fahrradfahrer 160 das Elektrofahrrad 100, wie in Figur 1 dargestellt, beispielsweise eine Steigung einer Fahrtstrecke 150 hinaufschiebt, so erfasst der erste Sensor 104 den Nickwinkel a des Elektrofahrrads 100, welcher somit ebenfalls die Steigung eines Hangs der aktuellen Fahrtstrecke 150 repräsentiert. Beim Schieben des Elektrofahrrads 100 kann es vorkommen, dass trotz aktivierter Schiebehilfe und angesteuertem Elektromotor 102 ein Stillstand des Antriebssystems 140 resultiert. Beispielsweise liegt ein Stillstand des Antriebssystems 140 vor, wenn eines der Antriebsräder 111 des Elektrofahrrads 100 gegen ein unüberwindbares Hindernis, wie eine Wand, oder gegen ein überwindbares Hindernis der Fahrtstrecke, wie einen Bordstein, stößt. Ein Stillstand des Antriebssystems 140 tritt beispielsweise auch auf, wenn der Fahrradfahrer 160 während einer aktivierten Schiebehilfe gleichzeitig die Bremse 112 des Elektrofahrrad 100 aktiviert. Wenn ein Stillstand des Antriebssystems 140 bzw. eine Blockade des Antriebsmotors 102 während der Ansteuerung des Elektromotors 102 resultiert beziehungsweise vorliegt, kann der Elektromotor 102 überhitzen und demnach verschleißen. In einer bevorzugten Ausgestaltung wird der Stillstand mindestens einer Komponente des Antriebssystems 140 in Abhängigkeit einer erfassten Betriebsgröße des Elektrofahrrads 100 ermittelt. Die Erfassung der Betriebsgröße erfolgt durch den zweiten Sensor 106. Beispielsweise erfasst ein Rotorlagesensor 106 als zweiter Sensor 106 eine Winkellage des Rotors beziehungsweise der Rotorwelle in dem Elektromotor 102. Es können mehrere Rotorlagesensoren 106 zur Erfassung der Winkellage des Rotors vorgesehen sein. Falls sich die Winkellage der Rotorwelle während einer vorgesehenen Prüfzeitspanne, beispielsweise während 0,5 bis 2 Sekunden, nicht ändert, wird ein Stillstand des Antriebssystems 140 ermittelt. Alternativ kann der zweite Sensor 106 an einer anderen Komponente des Antriebssystems 140 angeordnet sein, beispielsweise an einer Abtriebswelle und/oder an einem Getriebeteil. Der Stillstand des Antriebssystems 140 kann optional in Abhängigkeit einer mittels eines Drehzahlsensors als zweiter Sensor 106 erfassten Drehzahl als Betriebsgröße und/oder in Abhängigkeit eines mittels eines Drehmomentsensors als zweiter Sensor 106 erfassten Drehmoments als Betriebsgröße ermittelt werden. Ein Stillstand des Antriebssystems 140 kann darüber hinaus in Abhängigkeit einer mittels eines Geschwindigkeitssensors als zweiter Sensor 106 erfassten Geschwindigkeit des Elektrofahrrads 100 als Betriebsgröße ermittelt werden. Zusätzlich kann es vorgesehen sein, dass an dem Elektrofahrrad 100 ein Anhänger 190 angekoppelt wird. Die Ankopplung der Deichsel des Anhängers 190 an einer Kupplung 191 des Elektrofahrrads kann mittels eines weiteren Sensors, beispielsweise eines in Figur 1 nicht dargestellten Drucksensors 192 an der Kupplung 191, erfasst werden.

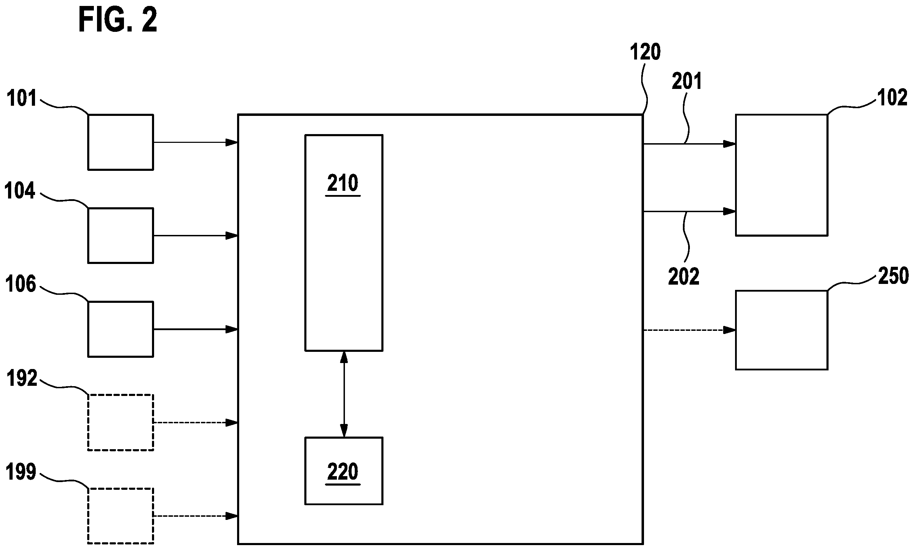

In Figur 2 ist das Steuergerät 120 mit einer Recheneinheit 210 dargestellt. Das Steuergerät 120 erfasst eine Betätigung des Fahrradfahrers 160 zur Aktivierung der Schiebehilfe mittels eines Betätigungsmittels 101, beispielsweise eines Schalters. Das Steuergerät 120 erfasst darüber hinaus eine erste Sensorgröße von einem ersten Sensor 104, welcher insbesondere eine initiale Messeinrichtung ist, wobei die erste Sensorgröße einen Nickwinkel α repräsentiert. Das Steuergerät 120 erfasst ferner eine Betriebsgröße mittels eines zweiten Sensors 106. Mittels der Recheneinheit 210 wird ein Stillstand einer Komponente des Antriebssystems 140 in Abhängigkeit der erfassten Betriebsgröße ermittelt. Es kann vorgesehen sein, dass das Steuergerät 120 mittels eines weiteren Sensors 192, beispielsweise, eines Drucksensors, die Ankopplung eines Anhängers 190 an das Elektrofahrrad 100 und/oder optional mittels einer Kamera 199 ein Kamerabild der Umgebung erfasst. Bei einer erfassten Betätigung des Betätigungsmittels 101 durch den Fahrradfahrer 160 erzeugt das Steuergerät 120 ein Steuersignal 201. Das Steuersignal 201 ist dazu eingerichtet, den Elektromotor 102 anzusteuern. Die Recheneinheit ermittelt in Abhängigkeit der erfassten Betriebsgröße einen Stillstand des Antriebssystems 140. Wenn der Stillstand des Antriebssystems ermittelt wird, wird in einem ersten, bevorzugten Ausführungsbeispiel der Erfindung das Steuersignal 201 nach Ablauf einer in Abhängigkeit des erfassten Nickwinkels α ermittelten Abschaltzeitspanne abgeschaltet, d.h. die Ansteuerung des Elektromotors 102 in Abhängigkeit der ermittelten Abschaltzeitspanne beendet. In einem zweiten Ausführungsbeispiel der Erfindung erzeugt das Steuergerät 120 in Abhängigkeit des erfassten Nickwinkels a und des ermittelten Stillstands des Antriebssystems 140 zusätzlich ein Abschaltsignal 202. Das Abschaltsignal 202 ist dazu eingerichtet, den Elektromotor 102 abzuschalten. Das Steuersignal 201 und das Abschaltsignals 202 können über eine gemeinsame Datenleitung übertragen werden. Alternativ oder zusätzlich können das Steuersignal 201 und das Abschaltsignals 202 jeweils über eine von mindestens zwei separaten Datenleitungen übertragen werden. Es kann vorgesehen sein, dass das Steuergerät 120 das Steuersignal 201 in Abhängigkeit einer aus einem Speicher 220 ausgelesenen Bautypkategorie des Elektrofahrrads 100 abschaltet beziehungsweise das Abschaltsignal 202 in Abhängigkeit der aus einem Speicher 220 ausgelesenen Bautypkategorie des Elektrofahrrads 100 erzeugt.

Das Steuergerät 120 kann weitere nicht dargestellte Signaleingänge und/oder Signalausgänge aufweisen. Optional kann das Steuergerät 120 beispielsweise ein Kühlsignal erzeugen, welches dazu eingerichtet ist, eine Kühlvorrichtung 250 in Abhängigkeit einer ermittelten Abschaltzeitspanne einzuschalten, wobei die Kühlvorrichtung 250 dazu eingerichtet es, den Elektromotor 102 zu kühlen. Die Kühlvorrichtung 250 ist insbesondere ein Ventilator. Beispielsweise wird das Kühlsignal bei einer Überschreitung eines vorgegebenen Schwellenwertes für die ermittelte Abschaltzeitspanne erzeugt. Alternativ oder zusätzlich wird das Kühlsignal in Abhängigkeit einer erfassten Temperatur des Elektromotors 102 erzeugt, wobei die Temperatur des Elektromotors 102 von dem Steuergerät 120 mittels eines Temperatursensors erfasst wird (in Figur 2 nicht dargestellt).

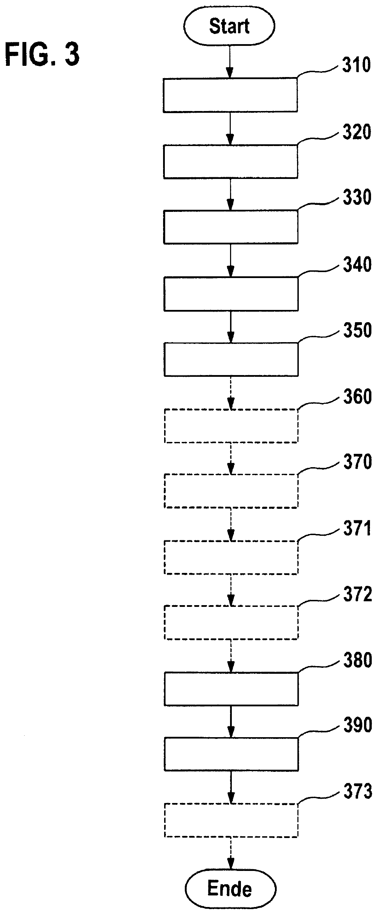

In Figur 3 ist ein Ablaufdiagramm des Steuerungsverfahren für den Elektromotor 102 des Elektrofahrrads 100 zum Betrieb der Schiebehilfe als Blockschaltbild dargestellt. Das Verfahren beginnt mit der Erfassung 310 der Aktivierung der Schiebehilfe. Anschließend wird der Elektromotor 102 in dem Schritt 320 in Abhängigkeit der erfassten Aktivierung angesteuert. Das Verfahren weist anschließend die Erfassung 330 des Nickwinkels α und die Erfassung 340 der Betriebsgröße des Elektrofahrrads 100 auf. In einem nachfolgenden Schritt 350 wird der Stillstand einer Komponente des Antriebssystems 140 des Elektrofahrrads 100 in Abhängigkeit der erfassten Betriebsgröße ermittelt. Nach dem ermittelten Stillstand wird eine Ermittlung 380 einer Abschaltzeitspanne in Abhängigkeit des erfassten Nickwinkels a durchgeführt. Es kann optional vorgesehen sein, dass Ortskoordinaten des Elektrofahrrads 100 in dem Schritt 360 erfasst werden und die Ermittlung 380 der Abschaltzeitspanne zusätzlich in Abhängigkeit der erfassten Ortskoordinaten erfolgt. Ferner kann optional die Erfassung 370 der Beschaffenheit des Untergrunds der Fahrtstrecke 150 des Elektrofahrrads 100 vorgesehen sein. Die Beschaffenheit des Untergrunds wird insbesondere in Abhängigkeit der Beschleunigung des Elektrofahrrads 100 in Richtung der Hochachse des Elektrofahrrads 100 und/oder in Abhängigkeit des mittels der Kamera 199 erfassten Kamerabildes der Umgebung des Elektrofahrrads 100 durchgeführt. Anschließend wird die Abschaltzeitspanne zusätzlich in Abhängigkeit der erfassten Beschaffenheit des Untergrunds ermittelt. Darüber hinaus kann es vorgesehen sein, dass die Ermittlung 380 der Abschaltzeitspanne zusätzlich in Abhängigkeit einer Bautypkategorie des Elektrofahrrads 100 erfolgt, insbesondere in Abhängigkeit der Bautypkategorien Mountainbike und/oder Cityrad. Optional kann ein Gewicht des Elektrofahrrads 100 erfasst werden. Die Ermittlung 380 der Abschaltzeitspanne erfolgt dann zusätzlich in Abhängigkeit des erfassten Gewichts. Schließlich kann eine Erfassung 372 einer Ankopplung eines Anhängers 190 an das Elektrofahrrad 100 durchgeführt werden. Die Ermittlung 380 der Abschaltzeitspanne wird anschließend zusätzlich in Abhängigkeit der erfassten Ankopplung durchgeführt. Wenn ein Stillstand einer Komponente des Antriebssystems 140 erkannt beziehungsweise ermittelt wurde, erfolgt die Abschaltung 390 des Elektromotors 102 schließlich in Abhängigkeit eines Ablaufs der ermittelten Abschaltzeitspanne.

Zusätzlich kann während des Ablaufs der Abschaltzeitspanne oder nach der Abschaltung eine Einschaltung 373 einer Kühlvorrichtung für den Elektromotor 102, insbesondere eines Ventilators, in Abhängigkeit der ermittelten Abschaltzeitspanne erfolgen. Beispielsweise wird die Kühlvorrichtung bei Überschreitung eines vorgegebenen Schwellenwerts für die ermittelte Abschaltzeitspanne und/oder in Abhängigkeit einer erfassten Temperatur des Elektromotors 102 eingeschaltet.

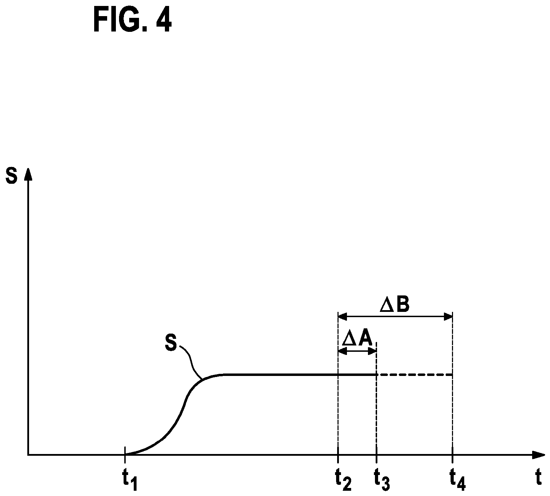

In Figur 4 ist ein Verlauf des Steuersignals S über der Zeit t zur Ansteuerung des Elektromotors dargestellt. Nach einer mittels des Betätigungsmittels 101 erfassten Aktivierung der Schiebehilfe zum Zeitpunkt t1 wird das Steuersignal S mittels des Steuergeräts 120 erzeugt. Das Steuersignal ist dazu eingerichtet, den Elektromotor 102 zur Kraftunterstützung des Fahrradfahrers 160 während der aktivierten Schiebehilfe anzusteuern. Zum Zeitpunkt t2 wird ein Stillstand einer Komponente des Antriebssystems ermittelt, beispielsweise der Stillstand des Elektromotors. Der Stillstand wird, wie oben beschrieben, vorteilhafterweise in Abhängigkeit des Rotorlageverlaufs ermittelt, wobei der Rotorlageverlauf mittels Rotorlagesensoren bzw. Rotorlagewinkelsensoren 106 erfasst wird. Anschließend wird der Nickwinkel α des Elektrofahrrads 100 erfasst und eine Abschaltzeitspanne ΔA(α1=0°) beziehungsweise ΔB(α2=20°) in Abhängigkeit des erfassten Nickwinkels α1 beziehungsweise a2 ermittelt. Das Steuersignal wird nach Ablauf der ermittelten Abschaltzeitspanne ausgeschaltet, wodurch die Ansteuerung des Elektromotors und damit der motorische Antrieb des Elektrofahrrads beendet werden. Die Abschaltzeitspanne wird damit an den erfassten Nickwinkel α1 beziehungsweise a2 angepasst. So werden beispielsweise an einer Ebene einer Fahrtstrecke, an welchem ein Nickwinkel von α1=0° vorliegt, die Abschaltzeitspanne ΔA(α1=0°) zu 3 Sekunden und an einem Hang, an welchem ein Nickwinkel von a2=20° vorliegt, die Abschaltzeitspanne ΔB(α2=20°) zu 10 Sekunden ermittelt.

## Patentansprüche

1. Steuerungsverfahren für einen Elektromotor (102) eines Elektrofahrrads (100), wobei der Elektromotor (102) Teil eines Antriebssystems (140) des Elektrofahrrads (100) ist, wobei das Verfahren mindestens die folgenden Schritte aufweist
• Erfassung (310) einer Aktivierung einer Schiebehilfe,
• Ansteuerung (320) des Elektromotors (102) in Abhängigkeit der erfassten Aktivierung,
• Erfassung (330) eines Nickwinkels (α) des Elektrofahrrads (100) um eine Querachse des Elektrofahrrads (100),
• Erfassung (340) einer Betriebsgröße des Elektrofahrrads (100), und
• Ermittlung (350) eines Stillstands einer Komponente des Antriebssystems (140) in Abhängigkeit der erfassten Betriebsgröße,
**dadurch gekennzeichnet, dass** die folgenden Schritte durchgeführt werden
• Ermittlung (380) einer Abschaltzeitspanne in Abhängigkeit des erfassten Nickwinkels (α), und
• Abschaltung (390) des Elektromotors (102) in Abhängigkeit eines Ablaufs der ermittelten Abschaltzeitspanne.

2. Verfahren nach Anspruch 1, **dadurch gekennzeichnet, dass** die folgenden Schritte durchgeführt werden
• Erfassung (360) von Ortskoordinaten des Elektrofahrrads (100), und
• Ermittlung (380) der Abschaltzeitspanne zusätzlich in Abhängigkeit der erfassten Ortskoordinaten.

3. Verfahren nach einem der vorhergehenden Ansprüche, **dadurch gekennzeichnet, dass** die folgenden Schritte durchgeführt werden
• Erfassung (370) einer Beschaffenheit eines Untergrunds einer Fahrtstrecke (150) des Elektrofahrrads (100), und
• Ermittlung (380) der Abschaltzeitspanne zusätzlich in Abhängigkeit der erfassten Beschaffenheit des Untergrunds.

4. Verfahren nach einem der vorhergehenden Ansprüche, **dadurch gekennzeichnet, dass** die Ermittlung (380) der Abschaltzeitspanne zusätzlich in Abhängigkeit einer Bautypkategorie des Elektrofahrrads (100) erfolgt.

5. Verfahren nach einem der vorhergehenden Ansprüche, **dadurch gekennzeichnet, dass** die folgenden Schritte durchgeführt werden
• Erfassung (371) eines Gewichts des Elektrofahrrads (100), und
• Ermittlung (380) der Abschaltzeitspanne zusätzlich in Abhängigkeit des erfassten Gewichts.

6. Verfahren nach einem der vorhergehenden Ansprüche, **dadurch gekennzeichnet, dass** die folgenden Schritte durchgeführt werden
• Erfassung (372) einer Ankopplung eines Anhängers (190) an das Elektrofahrrad (100), und
• Ermittlung (380) der Abschaltzeitspanne zusätzlich in Abhängigkeit der erfassten Ankopplung des Anhängers (190).

7. Verfahren nach einem der vorhergehenden Ansprüche, **dadurch gekennzeichnet, dass** während des Ablaufs der Abschaltzeitspanne der folgende Schritt durchgeführt wird
• Einschaltung (373) einer Kühlvorrichtung, insbesondere eines Ventilators, in Abhängigkeit der ermittelten Abschaltzeitspanne, insbesondere bei Überschreitung eines vorgegebenen Schwellenwerts für die ermittelte Abschaltzeitspanne.

8. Steuergerät (120), wobei das Steuergerät (120) zur Durchführung eines Steuerungsverfahrens für einen Elektromotor (102) eines Elektrofahrrads (100) nach einem der Ansprüche 1 bis 7 konfiguriert ist.

9. Elektrofahrrad (100) mindestens aufweisend die folgenden Komponenten
• ein Betätigungsmittel (101), zur Aktivierung einer Schiebehilfe für einen Fahrradfahrer (160) des Elektrofahrrads (100),
• einen Elektromotor (102), welcher dazu eingerichtet ist, das Elektrofahrrad (100) anzutreiben,
• einen ersten Sensor (104), welcher dazu eingerichtet ist, einen Nickwinkel des Elektrofahrrads (100) um eine Querachse des Elektrofahrrads (100) zu erfassen, insbesondere eine inertiale Messeinheit,
• einen zweiten Sensor (106), welcher dazu eingerichtet ist, eine Betriebsgröße des Elektrofahrrads (100) zu erfassen, und
• ein Steuergerät (120) nach Anspruch 8.

## Claims

1. Control method for an electric motor (102) of an electric bicycle (100), wherein the electric motor (102) is part of a drive system (140) of the electric bicycle (100), wherein the method comprises at least the following steps:
• detecting (310) activation of a walk assist function;
• actuating (320) the electric motor (102) as a function of the detected activation;
• detecting (330) a pitch angle (a) of the electric bicycle (100) about a transverse axis of the electric bicycle (100);
• detecting (340) an operating variable of the electric bicycle (100); and
• ascertaining (350) a stoppage of a component of the drive system (140) as a function of the detected operating variable,
**characterized in that** the following steps are carried out
• ascertaining (380) a switch-off time period as a function of the detected pitch angle (a), and
• switching off (390) the electric motor (102) as a function of the ascertained switch-off time period having elapsed.

2. Method according to Claim 1, **characterized in that** the following steps are carried out
• detecting (360) location coordinates of the electric bicycle (100), and
• ascertaining (380) the switch-off time period additionally as a function of the detected location coordinates.

3. Method according to either of the preceding claims, **characterized in that** the following steps are carried out
• detecting (370) a condition of the ground on a route (150) of the electric bicycle (100), and
• ascertaining (380) the switch-off time period additionally as a function of the detected condition of the ground.

4. Method according to one of the preceding claims, **characterized in that** the switch-off time period is ascertained (380) additionally as a function of a design category of the electric bicycle (100).

5. Method according to one of the preceding claims, **characterized in that** the following steps are carried out
• detecting (371) a weight of the electric bicycle (100), and
• ascertaining (380) the switch-off time period additionally as a function of the detected weight.

6. Method according to one of the preceding claims, **characterized in that** the following steps are carried out
• detecting (372) coupling of a trailer (190) to the electric bicycle (100), and
• ascertaining (380) the switch-off time period additionally as a function of the detected coupling of the trailer (190).

7. Method according to one of the preceding claims, **characterized in that** the following step is carried out as the switch-off time period proceeds
• switching on (373) a cooling device, in particular a fan, as a function of the ascertained switch-off time period, in particular when a specified threshold value for the ascertained switch-off time period is exceeded.

8. Controller (120), wherein the controller (120) is designed to carry out a control method for an electric motor (102) of an electric bicycle (100) according to one of Claims 1 to 7.

9. Electric bicycle (100) at least having the following components
• an actuating means (101) for activating a walk assist function for a bicycle rider (160) of the electric bicycle (100),
• an electric motor (102) which is designed to drive the electric bicycle (100),
• a first sensor (104) which is designed to detect a pitch angle of the electric bicycle (100) about a transverse axis of the electric bicycle (100), in particular an inertial measuring unit,
• a second sensor (106) which is designed to detect an operating variable of the electric bicycle (100), and
• a controller (120) according to Claim 8.

## Revendications

1. Procédé de commande pour un moteur électrique (102) d'une bicyclette électrique (100), le moteur électrique (102) faisant partie d'un système d'entraînement (140) de la bicyclette électrique (100), le procédé présentant au moins les étapes suivantes consistant à
• détecter (310) une activation d'une aide au démarrage,
• piloter (320) le moteur électrique (102) en fonction de l'activation détectée,
• détecter (330) un angle d'inclinaison (a) de la bicyclette électrique (100) sur un axe transversal de la bicyclette électrique (100),
• détecter (340) une grandeur de fonctionnement de la bicyclette électrique (100), et
• déterminer (350) une immobilisation d'un composant du système d'entraînement (140) en fonction de la grandeur de fonctionnement détectée,
**caractérisé en ce que** les étapes suivantes sont exécutées, consistant à
• déterminer (380) une période de temps d'arrêt en fonction de l'angle d'inclinaison (α) détecté, et
• arrêter (390) le moteur électrique (102) en fonction d'un écoulement de la période de temps d'arrêt déterminée.

2. Procédé selon la revendication 1, **caractérisé en ce que** les étapes suivantes sont exécutées, consistant à
• détecter (360) des coordonnées de lieu de la bicyclette électrique (100), et
• déterminer (380) la période de temps d'arrêt en plus en fonction des coordonnées détectées.

3. Procédé selon l'une quelconque des revendications précédentes, **caractérisé en ce que** les étapes suivantes sont exécutées, consistant à
• détecter (370) une nature d'un terrain d'un trajet (150) de la bicyclette électrique (100), et
• déterminer (380) la période de temps d'arrêt en plus en fonction de la nature détectée du terrain.

4. Procédé selon l'une quelconque des revendications précédentes, **caractérisé en ce que** la détermination (380) de la période de temps d'arrêt est en plus effectuée en fonction d'une catégorie de modèle de la bicyclette électrique (100).

5. Procédé selon l'une quelconque des revendications précédentes, **caractérisé en ce que** les étapes suivantes sont exécutées, consistant à
• détecter (371) un poids de la bicyclette électrique (100), et
• déterminer (380) la période de temps d'arrêt en plus en fonction du poids détecté.

6. Procédé selon l'une quelconque des revendications précédentes, **caractérisé en ce que** les étapes suivantes sont exécutées, consistant à
• détecter (372) un accouplement d'une remorque (190) à la bicyclette électrique (100), et
• déterminer (380) la période de temps d'arrêt en plus en fonction de l'accouplement détecté de la remorque (190).

7. Procédé selon l'une quelconque des revendications précédentes, **caractérisé en ce que** pendant l'écoulement de la période de temps d'arrêt, l'étape suivante est exécutée, consistant à
• brancher (373) un dispositif de refroidissement, en particulier un ventilateur, en fonction de la période de temps d'arrêt déterminée, en particulier en cas de dépassement d'une valeur seuil prédéfinie pour la période de temps d'arrêt déterminée.

8. Appareil de commande (120), l'appareil de commande (120) étant configuré pour exécuter un procédé de commande pour un moteur électrique (102) d'une bicyclette électrique (100) selon l'une quelconque des revendications 1 à 7.

9. Bicyclette électrique (100), présentant au moins les composants suivants
• un moyen d'actionnement (101) pour activer une aide au démarrage pour un cycliste (160) de la bicyclette électrique (100),
• un moteur électrique (102) qui est conçu pour entraîner la bicyclette électrique (100),
• un premier capteur (104) qui est conçu pour détecter un angle d'inclinaison de la bicyclette électrique (100) sur un axe transversal de la bicyclette électrique (100), en particulier une unité de mesure inertielle,
• un deuxième capteur (106) qui est conçu pour détecter une grandeur de fonctionnement de la bicyclette électrique (100), et
• un appareil de commande (120) selon la revendication 8.
